# EUROPÄISCHE PATENTSCHRIFT

(11) **EP 3 835 534 B1**
(45) Veröffentlichungstag und Bekanntmachung des Hinweises auf die Patenterteilung: **27.11.2024**
(21) Anmeldenummer: 19214434.3
(22) Anmeldetag: 09.12.2019
(51) Int. Cl.: E05F 15/643, E05F 15/603, H02K 7/10, H02K 9/22

(54) **TÜRANTRIEB MIT EINER MOTOREINHEIT**
DOOR DRIVE WITH A MOTOR UNIT
ENTRAINEMENT DE PORTE DOTÉ D'UNE UNITÉ MOTEUR

(43) Veröffentlichungstag der Anmeldung: 16.06.2021
(73) Patentinhaber: dormakaba Deutschland GmbH, 58256 Ennepetal (DE)
(72) Erfinder: Finis, Dietmar, 58256 Ennepetal (DE); Busch, Sven, 58256 Ennepetal (DE); Finke, Andreas, 58256 Ennepetal (DE)
(74) Vertreter: Balder IP Law, S.L.

(56) Entgegenhaltungen:
- EP-A1- 3 015 634
- EP-A2- 2 757 219
- DE-A1- 10 024 021
- DE-U1- 9 304 079
- US-A- 5 797 471
- US-A1- 2005 274 078

## Beschreibung

Die Erfindung betrifft einen Türantrieb zur Anordnung an oder in Verbindung mit einer Türanlage, mit dem zumindest ein Flügelelement der Türanlage bewegbar ist, aufweisend eine Motoreinheit mit einem Gehäuse, in dem ein Stator ruhend aufgenommen ist und wobei ein Rotor drehbeweglich im Gehäuse angeordnet ist, der eine Abtriebswelle aufweist, wobei die Abtriebswelle mit dem Flügelelement antreibend in Wirkverbindung bringbar ist. Weiterhin betrifft die Erfindung eine Türanlage mit einem solchen Türantrieb, aufweisend wenigstens ein Flügelelement, mit dem der Türantrieb antreibend in Wirkverbindung steht.

Aus der DE 10 2008 046 062 A1 ist ein Türantrieb zur Anordnung an einer Türanlage bekannt, und der Antrieb dient zur Bewegung von Flügelelementen der Türanlage, die als automatische Schiebetür ausgebildet ist. Der Türantrieb weist hierfür eine Motoreinheit mit einem Gehäuse auf, und an das Gehäuse der Motoreinheit ist eine Getriebeeinheit angebracht, die als Schneckenradgetriebe ausgeführt ist. Damit ist die Motoreinheit als schnelldrehender Motor konzipiert, und mit der Getriebeeinheit wird die höhere Drehzahl des Rotors der Motoreinheit reduziert auf eine geringere Drehzahl zum Antrieb einer Riemenscheibe, die auf eine Abtriebswelle der Getriebeeinheit aufgesetzt ist.

Über die Riemenscheibe wird ein Zahnriemen gelegt, der mit den Flügelelementen der automatischen Schiebetür verbunden wird. Da die Motoreinheit schnelldrehend ausgelegt ist, und die Drehzahl auf die Riemenscheibe reduziert werden muss, ist in Verbindung mit dem Motor die Getriebeeinheit notwendig, wodurch zusätzlicher Bauraum erforderlich wird, und wodurch die Konstruktion des Türantriebs komplexer wird. Die räumliche Dimensionierung des Türantriebs muss an die Notwendigkeit der Getriebeeinheit angepasst werden, und da der Motor eine zylinderförmige Grundform aufweist, nimmt dieser einen Bauraum ein, der in Bezug auf seine Einbauumgebung keine optimale Raumnutzung ermöglicht. Gleiches gilt für ein Schneckenradgetriebe, das insbesondere in Verbindung mit dem Motor quer verläuft und folglich sehr bauraum intensiv ist.

Insbesondere dann, wenn die Abtriebswelle zur direkten Aufnahme einer Riemenscheibe in der eingebauten Türanlage horizontal verlaufen soll, muss die Motorbauform vor allem in Erstreckungsrichtung der Abtriebswelle kurz ausfallen, da es sonst zu Bauraumproblemen im Einbau der Motoreinheit kommt. Dies liegt darin begründet, dass der mit einem Zahnriemen über die Riemenscheibe angetriebene Läufer im Trägerprofil, der zur Aufnahme eines Flügelelementes beispielsweise einer automatischen Schiebetür dient, noch innerhalb des Trägerprofils an der Riemenscheibe vorbeilaufen können muss. Daher sollte die Motoreinheit in Erstreckungsrichtung der Rotorachse möglichst kurzbauend ausfallen.

Einen weiteren Türantrieb offenbart die DE 10 2014 115 932 A1, und der Türantrieb weist als Grundkörper einen einteiligen quaderförmigen Körper auf, in den Aussparungen zur Aufnahme einer Motoreinheit und einer Getriebestufe eingebracht sind. Zur weiteren Aufnahme einer Steuerung, einem Netzteil und dergleichen sind in dem Block weitere Aussparungen und Öffnungen vorgesehen. Der quaderförmige Körper bildet also ein Gehäuse als Träger der einzelnen Komponenten des Türantriebes und ist über der gesamten Abmessung des Antriebes einteilig und gewissermaßen monolithisch ausgeführt.

Grundsätzlich wird bei der Konstruktion von Türantrieben zur Anordnung an oder in Verbindung mit einer Türanlage das Ziel verfolgt, den Türantrieb möglichst kompakt und mit kleinen Abmessungen auszuführen, beispielsweise indem eine Getriebeeinheit oder eine Getriebestufe innerhalb des Türantriebs bereits vermieden wird. Türantriebe werden üblicherweise oberhalb der linear bewegbaren Flügelelemente einer automatischen Schiebetüranlage angeordnet und weisen ein Trägerprofil auf, das einen Grundkörper der Türanlage bildet und am Trägerprofil werden der Türantrieb integriert montiert und gleichermaßen die Flügelelemente linear geführt. Als Verbindungsmittel zwischen dem Türantrieb und den Flügelelementen dient in der Regel ein Zahnriemen, wobei auch andere Zugmittel wie Kettenverbindungen und dergleichen möglich sind. Der Türantrieb bildet dabei mit wenigstens dem Motor, einem Netzteil und einer Steuerung eine eigene Baueinheit, die mit der Anordnung am Trägerprofil in die Türanlage integriert wird.

Um das Trägerprofil mit einer entsprechenden Blende, einem Gehäuse oder sonstigen Umbauteilen möglichst klein bauend auszuführen, ist es von Vorteil, auch und insbesondere den Türantrieb selbst möglichst kompakt und mit kleinen Abmessungen auszuführen. Da jedoch Flügelelemente aus Glas große Massen erreichen können, muss der Türantrieb eine hohe Leistungsdichte aufweisen, um derartige Flügelelemente entsprechend stark beschleunigen und auch wieder verzögern zu können, damit die Türanlage auch mit großen Flügelelementen noch eine angemessene Dynamik erreicht.

Für eine hohe Leistungsdichte und insbesondere einen geräuscharmen Betrieb bieten sich Motoreinheiten in Verbindung mit einem Zahnriemen als Direktantriebe an, bei denen auf der Abtriebswelle der Motoreinheit unmittelbar die Riemenscheibe aufgebracht wird, über die der Zahnriemen gelegt wird, der wiederum unmittelbar mit den Flügelelementen in Verbindung steht. Dadurch kann der Türantrieb geräuschminimal betrieben werden, da keine hohen Motordrehzahlen erreicht werden, und bei entsprechender Auslegung der Motoreinheit können Leistungsdichten bereitgestellt werden, die hinreichend sind, um Flügelelemente von beispielsweise 200kg bis 250kg für den Betrieb einer automatischen Schiebetür hinreichend stark zu beschleunigen und auch wieder zu verzögern.

Motor-Getriebeeinheiten mit einer zylinderförmigen Motoraußenform und einem quer dazu liegenden Schneckenradgetriebe ermöglichen keine besonders hohe Integrationsdichte, insbesondere in Bezug auf die bereitstellbare Ausgangsleistung an der Abtriebswelle. Ferner gestaltet sich die weitere kompakte Anordnung eines Netzteiles, einer Steuerung und beispielsweise eines Bedienteils unter Einhaltung einer hohen Integrationsdichte als schwierig. Solche Motor-Getriebeeinheiten sind aus DE 93 04 079, US 2005/274078 oder US 5 797 471 bekannt.

Aufgabe der Erfindung ist die Schaffung eines Türantriebs mit einer Motoreinheit, die eine hohe Integrationsdichte und eine hohe Leistungsdichte aufweist, und wobei der Motor in Verbindung mit dem wenigstens einen Flügelelement insbesondere als Direktantrieb ausgeführt sein soll. Die hohe Integrationsdichte des Türantriebes soll zudem auch in der Anordnung der Motoreinheit in Verbindung mit einem Netzteil und einer Steuerung erreicht werden, sowie mit einer möglichst kleinen Bauhöhe in Erstreckungsrichtung der Abtriebswelle.

Diese Aufgabe wird ausgehend von einem Türantrieb gemäß Anspruch 1 und ausgehend von einer Türanlage gemäß Anspruch 12 gelöst. Vorteilhafte Weiterbildungen der Erfindung sind in den abhängigen Ansprüchen und in der Beschreibung angegeben.

Die Erfindung schließt die technische Lehre ein, dass die Motoreinheit eine plan ausgeführte Stirnfläche aufweist, aus der die Abtriebswelle hervorsteht und wobei die Motoreinheit über zumindest eine Seitenfläche mittels wenigstens einem Flanschelement im Türantrieb haltend aufgenommen ist.

Kerngedanke der Erfindung ist eine Aufnahme der Motoreinheit, die nicht wie üblich über eine Stirnfläche erfolgt, an die ein Flansch oder eine sonstige Halterung angebracht wird. Erfindungsgemäß soll die Stirnfläche der Motoreinheit bzw. des Gehäuses plan ausgeführt und haltemittelfrei sein, und die Aufnahme der Motoreinheit erfolgt über speziell eine und vorzugsweise über beide Seitenflächen mittels eines oder mehreren Flanschelementen, sodass die Motoreinheit im Verbund des Türantriebs haltend aufgenommen wird.

Das kritische Maß der Motoreinheit ist das Höhenmaß in Erstreckungsrichtung der Abtriebswelle, und die Motoreinheit wird durch seitliche Flansche im Verbund des Türantriebs in der Höhenrichtung nicht vergrößert, wenn die Flanschelemente an Seitenflächen angebracht sind, die sich insbesondere senkrecht oder annähernd senkrecht zur Stirnfläche seitlich erstrecken. Beispielsweise weist der Türantrieb ein Netzteil, die Motoreinheit und eine nachfolgende Steuerung auf, wobei alle drei Hauptkomponenten nebeneinander und insbesondere in Verlaufsrichtung des Zahnriemens zur Ankopplung der Flügelelemente mit der Motoreinheit angeordnet sein können, das heißt radial bzw. seitlich zur Abtriebswelle.

Auf der Abtriebswelle außenseitig sitzt dann noch die Riemenscheibe auf, über die der Zahnriemen geführt wird, um eine Verbindung mit wenigstens einem Flügelelement des Türantriebs herzustellen. Werden keine weiteren Mittel zur Aufnahme der Motoreinheit vor oder an der Stirnfläche befestigt, so kann die Riemenscheibe bis kurz vor die Stirnfläche geführt werden, sodass die Gesamtlänge der Motoreinheit in Erstreckungsrichtung der Antriebswelle minimal gehalten wird.

Erfindungsgemäß weist die Motoreinheit in ihrer Grundform einen Quader auf. Ein Quader im vorliegenden Sinne ist ein Körper, der von sechs Rechteckflächen begrenzt wird, wobei die Rechteckflächen im Wesentlichen, aber nicht vollständig, plan sein sollten, also durchaus Anformungen, Wölbungen, Schrägungen, Rippen und dergleichen aufweisen können. Insofern ist die Quaderform der Motoreinheit allenfalls annähernd mathematisch zu verstehen; ein Rechteckkörper mit leichten Winkelabweichungen und Formabweichungen fällt damit vorliegend auch unter den Begriff des Quaders, ohne also am mathematischen Begriff eines Quaders zu haften.

Beispielsweise können Lagerelemente mit Abschnitten aus einer der den Quader begrenzenden Flächen hervorstehen, zudem können Verrippungen, Anformungen und dergleichen außen am Quader vorhanden sein. Der Quader ist insofern nur als Grundform des Gehäuses der Motoreinheit zu verstehen, sodass der Motor im Wesentlichen keine Zylinderform aufweist. Die Motoreinheit selbst ist jedoch ein vereinzelbares Bauteil, ohne dass die Motoreinheit beispielsweise in konstruktivem Verbund mit einem Getriebe oder dergleichen ausgeführt ist.

Die Motoreinheit selbst bildet eine Einheit, die lediglich über Verbindungsmittel im Verbund des Türantriebs aufgenommen wird; die Motoreinheit im Sinne der Erfindung ist damit nicht baueinheitlich mit einem Getriebe, einer sonstigen Anordnung einer Komponente oder dergleichen ausgeführt.

Mit weiterem Vorteil weist das Gehäuse eine erste Gehäusehälfte und eine zweite Gehäusehälfte auf, wobei die Gehäusehälften miteinander verbunden sind und auf einer Teilungsebene aneinander angrenzen. Die Gehäusehälften können halbschalenförmig ausgeführt sein, und werden die Gehäusehälften miteinander verbunden, vervollständigt sich der so gebildete Gehäusekörper zu einem Quader. Die Gehäusehälften müssen dabei nicht zwingend eine exakte Hälfte des gesamten Gehäuses bilden, und die Teilungsebene zwischen den Gehäusehälften muss nicht auf einer halben Höhe einer Höhenkante des Quaders liegen. Insofern können auch Gehäusehälften vorgesehen sein, die unterschiedlich bemaßt, gestaltet und dimensioniert sind, diese können jedoch in einer Weise aufeinander gebracht und verbunden werden, dass der Quader zur Bildung des Gehäuses entsteht, um so die Grundform der Motoreinheit zu bilden.

Gemäß einer weiteren vorteilhaften Ausführungsform weist der Quader eine Längskante, eine Breitenkante und eine Höhenkante auf, wobei die Längskante größer ist als die Breitenkante und/oder wobei die Breitenkante größer ist als die Höhenkante. Beispielsweise weist die Breitenkante eine Länge von 70 % bis 98 %, insbesondere von 85 % bis 95 % von der Länge der Längskante auf. Die Höhenkante weist eine Länge von 30 % bis 60 %, insbesondere von 40 % bis 50 % von der Länge der Längskante auf. Beträgt die Länge der Längskante beispielsweise 100 mm, so weist die Breitenkante eine Länge von beispielsweise 90 mm auf, und die Höhenkante weist eine Länge von beispielsweise 40 mm bis 50 mm auf.

Die Gehäusehälften sind vorteilhafterweise so ausgestaltet, dass wenigstens der Stator und der Rotor innenseitig zwischen den Gehäusehälften aufgenommen sind. Insbesondere können die Gehäusehälften schalenartig ausgeführt werden, und diese werden mittelbar oder unmittelbar aneinander angebracht. Werden die Gehäusehälften unmittelbar aneinander verbunden, so wird ein umlaufender, etwa rechteckförmiger Rand der jeweiligen Gehäusehälfte aufeinander gefügt, wobei bei einer mittelbaren Verbindung der Gehäusehälften miteinander auch ein Zwischenelement zwischen den Gehäusehälften angeordnet sein kann, beispielsweise ein Dichtelement oder dergleichen.

Nach einer weiteren Ausgestaltung des Türantriebs ist ein erstes Flanschelement vorgesehen, dass an der ersten Seitenfläche angeordnet ist und ein Netzteil aufnimmt, und es ist vorteilhafterweise ein zweites Flanschelement vorgesehen, das an der zweiten Seitenfläche angeordnet ist und die Steuerung mit aufnimmt, wobei die erste Seitenfläche und die zweite Seitenfläche gegenüberliegend an der Motoreinheit ausgebildet sind.

Damit bilden das Netzteil und die Steuerung eine Verlängerung des Türantriebs in der Erstreckungsrichtung der Längskante des Quaders der Motoreinheit, wobei die Erstreckungsrichtung der Längskante bauraumunkritisch ist. Das ist dann der Fall, wenn die Längskante der Motoreinheit sich parallel zur Längsrichtung eines Trägerprofils des Türantriebs erstreckt. In dieser Richtung ist die Integration des Türantriebs nicht so bauraumkritisch wie in einer Querrichtung dazu, insbesondere in Erstreckungsrichtung der Abtriebswelle. Auch ist es von Vorteil, die Motoreinheit im Verbund mit dem Netzteil und/oder der Steuerung elektrisch zu isolieren, sodass zusätzlich ein Isolierungselement zwischen dem Flanschelement und der Motoreinheit vorhanden ist.

Der Türantrieb kann als Grundkörper ein Trägerprofil aufweisen, mittels dem der Türantrieb oberseitig einer Wandöffnung angebracht werden kann. Die Flanschelemente sind dabei vorzugsweise direkt mit dem Trägerprofil verbunden, sodass die Motoreinheit, die ebenfalls an dem wenigstens einen oder den mehreren Flanschelementen angebracht ist, über die Flanschelemente mit dem Trägerprofil verbunden ist. Das Trägerprofil weist beispielsweise ein L-förmiges Aluminiumprofil auf, und die Motoreinheit kann in Bezug auf eine spätere Einbaulage so zum Trägerprofil ausgerichtet und an diesem angeordnet sein, dass die Abtriebswelle eine horizontale Erstreckung aufweist. Dadurch ergibt sich ein Verlauf des Riemens mit vertikal übereinander angeordneten Riemensträngen. Diese Ausführung ist vorteilhaft in Bezug auf die geforderte Bewegung der Flügelelemente und in Bezug auf eine Integration einer Blockiereinrichtung für die Flügelelemente, die mit dem Riemen in Verbindung gebracht werden.

Die Flanschelemente können Blechelemente bilden, die im Stanz-BiegeVerfahren hergestellt sind, und die so geformt sind, dass der Motor über seine Seitenflächen mit den Flanschelementen im Trägerprofil angebracht ist, wobei zusätzlich jedem Flanschelement beispielsweise ein weiteres Bauteil zugeordnet ist, und ein erstes Flanschelement kann beispielsweise ein Netzteil mit aufnehmen und ein weiteres Flanschelement kann beispielsweise eine Steuerung mit aufnehmen. Ferner können ein Bedien-und Anzeigemittel und weitere Komponenten zum Betrieb des Türantriebs mittels der Flanschelemente gleichermaßen aufgenommen werden.

Auf der Abtriebswelle ist eine Riemenscheibe angeordnet, sodass die Motoreinheit als Direktantrieb für das wenigstens eine Flügelelement ausgebildet ist. Derartige Motoren sind als Torque-Motoren bekannt, und sind der Kategorie der Langsamläufer zugeordnet. Wird die Riemenscheibe direkt auf die Abtriebswelle aufgesetzt, entfällt ein Getriebe, und der Rotor der Motoreinheit rotiert gleichermaßen mit der Riemenscheibe. Insbesondere ist die Motoreinheit als elektronisch kommutierter Vielpolmotor ausgebildet.

Da erfindungsgemäß die Stirnfläche der Motoreinheit plan ausgeführt ist und damit insbesondere frei von Befestigungsmitteln, kann der Abstand der Riemenscheibe bis vor die Stirnfläche der Motoreinheit einen Wert von ca. 0,2 mm bis 5 mm und insbesondere von 0,5 mm bis 2,5 mm aufweisen. Die Riemenscheibe weist eine gezahnte Mantelfläche auf, die bis vor die Stirnfläche reicht, wobei die Riemenscheibe nur auf dem der Stirnfläche abgewandten freien Ende eine Bordscheibe aufweist, sodass der Zahnriemen in axialer Richtung zwischen der Stirnfläche der Motoreinheit und der Bordscheibe gehalten ist. Wird die Motoreinheit oder insbesondere die Abtriebswelle durch die eingebrachten Riemenkräfte ganz leicht geneigt, so wird sichergestellt, dass der Zahnriemen im Wesentlichen nicht gegen der Stirnfläche geführt wird sondern nur über die Bordscheibe.

Die Stirnfläche ist erfindungsgemäß frei von Befestigungsmitteln ausgebildet, insbesondere ist der Bereich über der Stirnfläche frei von Flanschelementen. Alternativ kann beispielsweise eine weitere Leiterkarte über der Stirnfläche angeordnet werden, der nicht vom Zahnriemen eingenommen wird. Ferner besteht die Möglichkeit, auf der Stirnfläche einen Riemenschutz anzuordnen, der verhindert, dass der Riemen von der Riemenscheibe gelangt, und der weiterhin verhindert, dass ein Überspringen des Zahnriemens über der gezahnten Mantelfläche erfolgt. Derartige weitere Aufbauten auf der Stirnfläche sind dabei erfindungsgemäß nicht höher ausgebildet als die Höhe der Riemenscheibe.

Die Erfindung betrifft weiterhin eine Türanlage mit einem Türantrieb mit den vorstehend beschriebenen Merkmalen. Die Türanlage kann ein Verbindungselement zum Verbinden mit einem Flügelelement aufweisen. Zusätzlich oder alternativ kann die Türanlage wenigstens ein Flügelelement, mit dem der Türantrieb antreibend in Wirkverbindung steht, aufweisen.

Beispielsweise kann die Türanlage als eine Schiebetüranlage ausgebildet sein. Die Schiebetüranlage kann einen Riemen, insbesondere einen Zahnriemen, umfassen. Das Verbindungselement kann zumindest mittelbar mit dem Riemen verbunden sein. Das Verbindungselement kann als Läufer, insbesondere als Rollwagen, ausgebildet sein. Das Verbindungselement kann in einer Schiene, insbesondere in einer Schiene des Trägerprofils, laufen. Der Riemen kann zwischen Riemenscheiben der Türanlage gespannt sein. Eine der Riemenscheiben kann als die Riemenscheibe des erfindungsgemäßen Türantriebs ausgebildet sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Gesamtansicht des Türantriebs mit einer in diesem erfindungsgemäß aufgenommenen Motoreinheit,
- Fig. 2: eine weitere Gesamtansicht des Türantriebs,
- Fig. 3: eine perspektivische Ansicht der Motoreinheit ohne eine obere Gehäusehälfte,
- Fig. 4: eine weitere Ansicht der Motoreinheit in einer Vorderansicht.

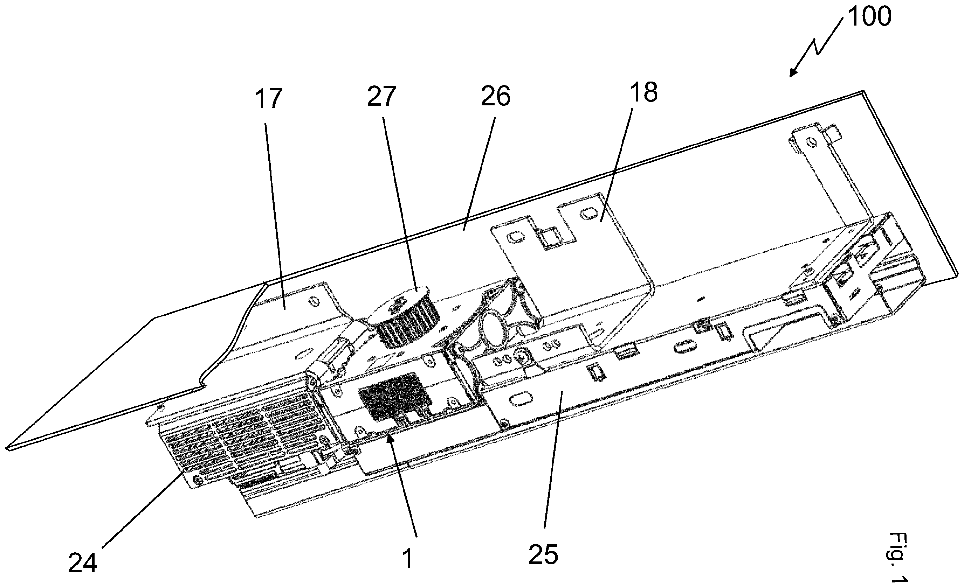

Fig. 1 zeigt eine Gesamtansicht des Türantriebs 100, wie dieser in einem Gebäude installiert werden kann, womit auch die Installation auf Schiffen und in Flugzeugen umfasst sein soll, und ein Türantrieb 100 dieser Art dient beispielsweise als Antrieb für eine automatische Schiebetüranlage. Die Grundstruktur des Türantriebs 100 bildet ein Trägerprofil 26, welches zur einfacheren Ansicht verkürzt dargestellt ist, zudem ist der wesentliche obere Teil des L-förmigen Trägerprofils 26 aufgeschnitten gezeigt, um die weiteren vorliegend wesentlichen Komponenten des Türantriebs 100 sichtbar zu machen.

Als zentraler Bestandteil weist der Türantrieb 100 eine Motoreinheit 1 auf, und die Motoreinheit 1 besitzt die Grundform eines Quaders, der das Gehäuse 10 der Motoreinheit 1 bildet. Um einen Abtrieb und damit eine Verbindung zu einem nicht näher dargestellten Flügelelement einer Türanlage mit dem Türantrieb 100 zu ermöglichen, ist an der Motoreinheit 1 eine Riemenscheibe 27 angeordnet, über die ein Zahnriemen gelegt werden kann, mit dem schließlich die Verbindung zu dem oder den Flügelelementen, beispielsweise den Glasschiebeelementen, hergestellt wird.

Benachbart zur Motoreinheit 1 weist der Türantrieb 100 ein Netzteil 24 und eine Steuerung 25 auf, und das Netzteil 24 und die Steuerung 25 sind an sich gegenüberliegenden Seiten der Motoreinheit 1 angeordnet. Die Motoreinheit 1 ist mit einem ersten Flanschelement 17 am Trägerprofil 26 befestigt, wobei das erste Flanschelement 17 zugleich das Netzteil 24 mit aufnimmt. Weiterhin ist die Motoreinheit 1 mit einem zweiten Flanschelement 18 mit dem Trägerprofil 26 verbunden, wobei das zweite Flanschelement 18 zugleich die Steuerung 25 aufnimmt. Alternativ ist auch die Ausführung eines einzigen Flansches möglich, um wenigstens die Motoreinheit 1, das Netzteil 24 und die Steuerung 25 aufzunehmen, ferner besteht die Möglichkeit, dass die Motoreinheit, das Netzteil 24 und/oder die Steuerung 25 jeweils zugeordnete separate Flanschelemente zur Anordnung im oder am Trägerprofil 26 aufweisen.

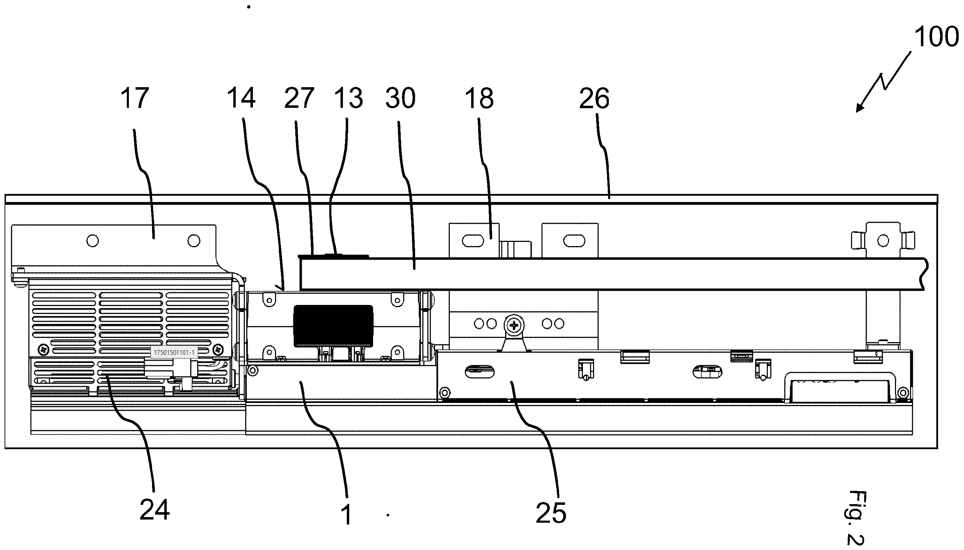

Fig. 2 zeigt eine weitere Ansicht des Türantriebs 100 aus einer Seitenrichtung, sodass sich das Trägerprofil 26 auf der hinteren Seite befindet. Das Trägerprofil 26 erstreckt sich zur rechten Bildebene hin in nicht weiter dargestellter Form weiter, und ist insodern gebrochen dargestellt. Der Türantrieb 100 ist mit der Motoreinheit 1 gezeigt, die sich bzgl. der Anordnung zwischen dem Netzteil 24 und der Steuerung 25 befindet. Das Netzteil 24 ist am Flanschelement 17 aufgenommen, und die Steuerung 25 ist am Flanschelement 18 aufgenommen. Beide Flanschelemente 17 und 18 dienen zudem zur haltenden Anordnung der Motoreinheit 1 an dem Trägerprofil 26.

Der Zahnriemen 30 erstreckt sich in einer Richtung beginnend von der Abtriebswelle 13 und der auf dieser aufgebrachten Riemenscheibe 27 nach rechts zur Kopplung mit nicht näher dargestellten Flügelelementen der Türanlage, die ebenfalls im Trägerprofil 26 geführt sein können. Durch die flache Ausgestaltung der Steuerung 25 kann der Zahnriemen 30 oberhalb der Steuerung 25 verlaufen, ohne dass sich die Baugröße des Türantriebs 100 durch die Anordnung des Zahnriemens 30 vergrößern würde.

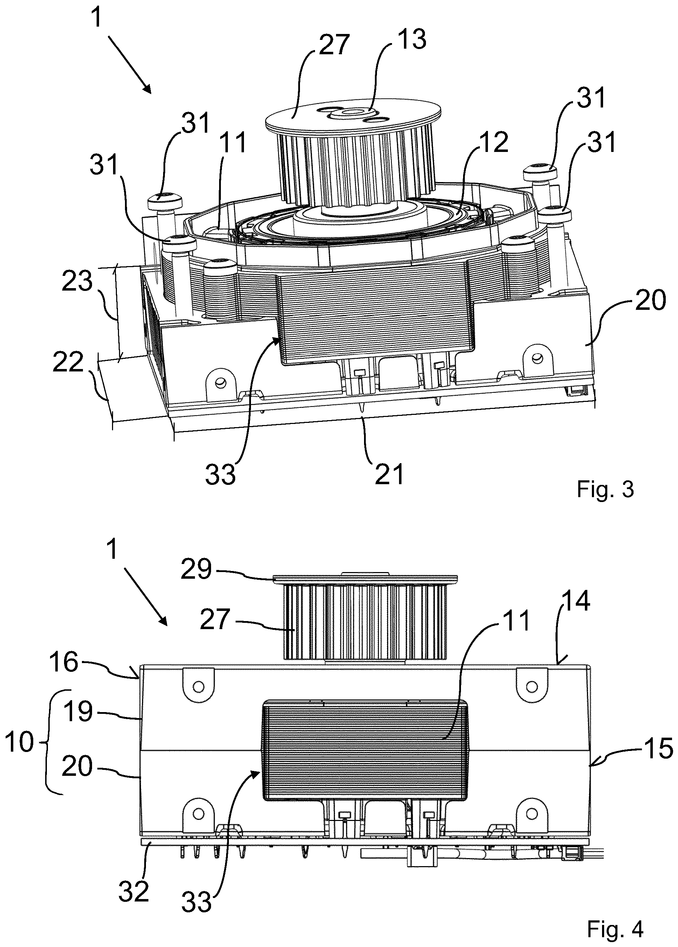

In den Figuren 3 und 4 ist die Motoreinheit 1 vereinzelt dargestellt, wobei die Fig. 3 die Motoreinheit 1 perspektivisch zeigt, und in der Darstellung ist die obere Gehäusehälfte 19 entnommen, wobei in Fig. 4 das Gehäuse 10 mit beiden Gehäusehälften 19 und 20 in einer seitlichen Ansicht gezeigt ist.

Innerhalb der Gehäusehälften 19 und 20 befinden sich der Stator 11 und innerhalb des Stators 11 ist der Rotor 12 drehbar aufgenommen. Der Rotor 12 weist eine Abtriebswelle 13 auf, auf der die Riemenscheibe 27 unmittelbar angeordnet ist, sodass über die Riemenscheibe 27 der Zahnriemen 30 gelegt werden kann, um eine direkte Kopplung mit dem wenigstens einen Flügelelement der Türanlage herzustellen.

Über die Schraubelemente 31 werden die beiden Gehäusehälften 19, 20 miteinander verschraubt, sodass diese unmittelbar miteinander verbunden sind.

Fig. 4 zeigt durch die seitliche Ansicht die plane Ausführung der Stirnfläche 14, über der unmittelbar die Riemenscheibe 27 mit der Bordscheibe 29 in ihrer Anordnung folgt. Die Aufnahme der Motoreinheit 1 im Verbund des Türantriebs 100 mittels der Flanschelemente 17, 18 (siehe Fig. 1 und 2) erfolgt über die Seitenflächen 15, 16, die sich seitlich zur Stirnfläche 14 am quaderförmigen Gehäuse 10 befinden.

Auf der der Stirnfläche 14 gegenüberliegenden Seite des Gehäuses 10 ist an diesem eine Leiterkarte 32 angeordnet, die Bestandteil der Motoreinheit 1 ist und zur kabellosen Kontaktierung und Beschaltung der Wicklungen des Stators 11 dient. Hierfür weist die Leiterkarte 32 kabellose Verbindungen mit dem Wicklungsdraht des Stators 11 auf.

Der Stator 11 ist über fensterartige Aussparungen 33 mit einer Planfläche jeweils an zwei sich gegenüberliegenden Seiten des Gehäuses 10 nach außen geführt, um einen Kühlkontakt mit einem weiteren Bauteil, beispielsweise mit dem Trägerprofil 26, herstellen zu können, obwohl das Gehäuse 10 im Wesentlichen geschlossen ausgeführt ist.

Die Quaderform des Gehäuses 10 ist bestimmt durch die Längskante 21, die Breitenkante 22 und die Höhenkante 23, und die Längskante 21 weist eine größere Länge auf, als die Breitenkante 22. Die Höhenkante 23 weist eine Länge auf, die etwa der Hälfte der Breitenkante 22 aufweist. Durch die Ausbildung der Seitenflächen 15 und 16 mit einem Abstand zueinander, der bestimmt ist durch die Länge der Längskante 21, kann die Motoreinheit 1 im Verbund mit dem Türantrieb 100 so eingesetzt werden, dass sich die Längskante 21 in einer gleichen Richtung erstreckt wie der Zahnriemen 30. Die Abtriebswelle 13 erstreckt sich dabei quer zur Längskante 21 und damit parallel in Verlaufsrichtung der Höhenkante 23, und durch die erfindungsgemäße Ausgestaltung ist die Motoreinheit 1 mit der Riemenscheibe 27 sehr kurz bauend ausgeführt.

Die Erfindung beschränkt sich in ihrer Ausführung nicht auf das vorstehend angegebenen bevorzugte Ausführungsbeispiel. Vielmehr ist eine Anzahl von Varianten denkbar, welche von der dargestellten Lösung auch bei grundsätzlich anders gearteten Ausführungen Gebrauch macht, sofern diese unter den in den beigefügten Ansprüchen definierten Umfang der Erfindung fällt.

### Bezugszeichenliste

- 100: Türantrieb

- 1: Motoreinheit
- 10: Gehäuse
- 11: Stator
- 12: Rotor
- 13: Abtriebswelle
- 14: Stirnfläche
- 15: Seitenfläche
- 16: Seitenfläche
- 17: Flanschelement
- 18: Flanschelement
- 19: Gehäusehälfte
- 20: Gehäusehälfte
- 21: Längskante
- 22: Breitenkante
- 23: Höhenkante
- 24: Netzteil
- 25: Steuerung
- 26: Trägerprofil
- 27: Riemenscheibe
- 28: Mantelfläche
- 29: Bordscheibe
- 30: Zahnriemen
- 31: Schraubelement
- 32: Leiterkarte
- 33: fensterartige Aussparung

## Patentansprüche

1. Türantrieb (100) zur Anordnung an oder in Verbindung mit einer Türanlage, mit dem zumindest ein Flügelelement der Türanlage bewegbar ist, aufweisend eine Motoreinheit (1) mit einem Gehäuse (10), in dem ein Stator (11) ruhend aufgenommen ist und wobei ein Rotor (12) drehbeweglich im Gehäuse (10) angeordnet ist, der eine Abtriebswelle (13) aufweist, wobei die Abtriebswelle (13) mit dem Flügelelement antreibend in Wirkverbindung bringbar ist,
wobei die Grundform der Motoreinheit (1) einen Quader aufweist und die Motoreinheit (1) eine plan ausgeführte Stirnfläche (14) aufweist, aus der die Abtriebswelle (13) hervorsteht und wobei die Motoreinheit (1) über zumindest eine Seitenfläche (15, 16) mittels wenigstens einem Flanschelement (17, 18) im Türantrieb (100) haltend aufgenommen ist.

2. Türantrieb (100) nach Anspruch 1, **dadurch gekennzeichnet, dass** das Gehäuse (10) eine erste Gehäusehälfte (19) und eine zweite Gehäusehälfte (20) aufweist, wobei die Gehäusehälften (19, 20) miteinander verbunden sind und in einer Teilungsebene aneinander anliegen.

3. Türantrieb (100) nach Anspruch 1 oder 2, **dadurch gekennzeichnet, dass** der Quader eine Längskante (21), eine Breitenkante (22) und eine Höhenkante (23) aufweist, wobei die Längskante (21) größer ist als die Breitenkante (22) und/oder wobei die Breitenkante (22) größer ist als die Höhenkante (23).

4. Türantrieb (100) nach einem der vorgenannten Ansprüche, **dadurch gekennzeichnet, dass** ein erstes Flanschelement (17) vorgesehen ist, das an der ersten Seitenfläche (15) angeordnet ist und insbesondere ein Netzteil (24) aufnimmt, und dass ein zweites Flanschelement (18) vorgesehen ist, das an der zweiten Seitenfläche (16) angeordnet ist und insbesondere eine Steuerung (25) aufnimmt, wobei die erste Seitenfläche (15) und die zweite Seitenfläche (16) gegenüberliegend an der Motoreinheit (1) ausgebildet sind.

5. Türantrieb (100) nach Anspruch 4, **dadurch gekennzeichnet, dass** der Türantrieb (100) als Grundkörper ein Trägerprofil (26) aufweist, wobei die Flanschelemente (17, 18) am Trägerprofil (26) befestigt sind, sodass die Motoreinheit (1) mittels der Flanschelemente (17, 18) am Trägerprofil (26) angeordnet ist.

6. Türantrieb (100) nach einem der vorgenannten Ansprüche, **dadurch gekennzeichnet, dass** auf der Abtriebswelle (13) eine Riemenscheibe (27) angeordnet ist, wobei die Riemenscheibe (27) sich bis vor die Stirnfläche (14) erstreckt.

7. Türantrieb (100) nach Anspruch 6, **dadurch gekennzeichnet, dass** der Abstand der Riemenscheibe (27) bis vor die Stirnfläche (14) einen Wert von 0,2mm bis 5mm und/oder von 0,5mm bis 2,5mm aufweist.

8. Türantrieb (100) nach Anspruch 6 oder 7, **dadurch gekennzeichnet, dass** die Riemenscheibe (27) eine gezahnte Mantelfläche (28) aufweist, die bis vor die Stirnfläche (14) reicht und wobei Riemenscheibe (27) auf dem der Stirnfläche (14) abgewandten freien Ende eine Bordscheibe (29) aufweist.

9. Türantrieb (100) nach einem der vorgenannten Ansprüche, **dadurch gekennzeichnet, dass** die Stirnfläche (14) frei von Befestigungsmitteln ausgebildet ist.

10. Türantrieb (100) nach einem der vorgenannten Ansprüche, **dadurch gekennzeichnet, dass** der Bereich über der Stirnfläche (14) frei von Flanschelementen ausgebildet ist.

11. Türantrieb (100) nach einem der Ansprüche 4 bis 10, **dadurch gekennzeichnet, dass** sich ein über die Riemenscheibe (27) gelegter Riemen (30) über der Steuerung (25) hinweg erstreckt, und/oder wobei das Netzteil (24) auf einer der Erstreckung des Riemens (30) abgewandten Seite an der Motoreinheit (1) angeordnet ist.

12. Türanlage mit einem Türantrieb (100) gemäß einem der vorgenannten Ansprüche, aufweisend wenigstens ein Verbindungselement zum Verbinden mit einem Flügelelement und/oder wenigstens ein Flügelelement, mit dem der Türantrieb (100) antreibend in Wirkverbindung steht.

## Claims

1. A door drive (100) for arrangement on or in connection with a door system, with which at least one leaf element of the door system can be moved, having a motor unit (1) with a housing (10) in which a stator (11) is accommodated in a stationary manner and wherein a rotor (12) is arranged so as to be rotatably movable in the housing (10) which has an output shaft (13), wherein the output shaft (13) can be brought into operative connection with the leaf element in a driving manner,
wherein the basic shape of the motor unit (1) has a cuboid and the motor unit (1) has a flat end face (14) from which the output shaft (13) protrudes and wherein the motor unit (1) is accommodated in a retained manner in the door drive (100) via at least one side surface (15, 16) by means of at least one flange element (17, 18).

2. The door drive (100) according to claim 1, **characterised in that** the housing (10) has a first housing half (19) and a second housing half (20), wherein the housing halves (19, 20) are connected to one another and lie against one another in a dividing plane.

3. The door drive (100) according to claim 1 or 2, **characterised in that** the cuboid has a longitudinal edge (21), a width edge (22) and a height edge (23), wherein the longitudinal edge (21) is larger than the width edge (22) and/or wherein the width edge (22) is larger than the height edge (23).

4. The door drive (100) according to one of the preceding claims, **characterised in that** a first flange element (17) is provided, which is arranged on the first side surface (15) and in particular accommodates a power supply unit (24), and **in that** a second flange element (18) is provided, which is arranged on the second side surface (16) and in particular accommodates a controller (25), wherein the first side surface (15) and the second side surface (16) are formed opposite one another on the motor unit (1).

5. The door drive (100) according to claim 4, **characterised in that** the door drive (100) has a carrier profile (26) as a base body, wherein the flange elements (17, 18) are fastened to the carrier profile (26) such that the motor unit (1) is arranged on the carrier profile (26) by means of the flange elements (17, 18).

6. The door drive (100) according to one of the preceding claims, **characterised in that** a pulley (27) is arranged on the output shaft (13), wherein the pulley (27) extends up to the end face (14).

7. The door drive (100) according to claim 6, **characterised in that** the distance from the pulley (27) to the end face (14) has a value of 0.2 mm to 5 mm and/or 0.5 mm to 2.5 mm.

8. The door drive (100) according to claim 6 or 7, **characterised in that** the pulley (27) has a toothed outer surface (28) which extends up to the end face (14) and wherein the pulley (27) has a flanged disk (29) on the free end facing away from the end face (14).

9. The door drive (100) according to one of the preceding claims, **characterised in that** the end face (14) is designed to be free of fastening means.

10. The door drive (100) according to one of the preceding claims, **characterised in that** the region above the end face (14) is designed to be free of flange elements.

11. The door drive (100) according to one of claims 4 to 10, **characterised in that** a belt (30) laid over the pulley (27) extends over the controller (25), and/or wherein the power supply unit (24) is arranged on a side of the motor unit (1) facing away from the extension of the belt (30).

12. A door system with a door drive (100) according to one of the preceding claims, having at least one connecting element for connection to a leaf element and/or at least one leaf element with which the door drive (100) is operatively connected in a driving manner.

## Revendications

1. Entraînement de porte (100) destiné à être agencé sur ou en combinaison avec un système de porte , avec lequel au moins un élément battant du système de porte peut être déplacé, présentant une unité moteur (1) comportant un boîtier (10), dans lequel un stator (11) est reçu au repos et dans lequel un rotor (12) est agencé déplaçable en rotation dans le boîtier (10), qui présente un arbre de sortie (13), dans lequel l'arbre de sortie (13) peut être amené en liaison fonctionnelle par entraînement avec l'élément battant,
dans lequel la forme de base de l'unité moteur (1) présente un parallélépipède et l'unité moteur (1) présente une face frontale (14) réalisée plane, à partir de laquelle l'arbre de sortie (13) fait saillie et dans lequel l'unité moteur (1) est reçue dans l'entraînement de porte (100) par l'intermédiaire d'au moins une face latérale (15, 16) au moyen d'au moins un élément bride (17, 18).

2. Entraînement de porte (100) selon la revendication 1, **caractérisé en ce que** le boîtier (10) présente une première moitié de boîtier (19) et une seconde moitié de boîtier (20), dans lequel les moitiés de boîtier (19, 20) sont reliées l'une à l'autre et reposent l'une contre l'autre dans un plan de séparation.

3. Entraînement de porte (100) selon la revendication 1 ou 2, **caractérisé en ce que** le parallélépipède présente un bord en longueur (21), un bord en largeur (22) et un bord en hauteur (23), dans lequel le bord en longueur (21) est plus grand que le bord en largeur (22) et/ou dans lequel le bord en largeur (22) est plus grand que le bord en hauteur (23).

4. Entraînement de porte (100) selon l'une quelconque des revendications précédentes, **caractérisé en ce qu'**il est prévu un premier élément bride (17), qui est agencé sur la première face latérale (15) et reçoit en particulier une alimentation électrique (24), et **en ce qu'**il est prévu un second élément bride (18), qui est agencé sur la seconde face latérale (16) et reçoit en particulier une commande (25), dans lequel la première face latérale (15) et la seconde face latérale (16) sont formées l'une en face de l'autre sur l'unité moteur (1).

5. Entraînement de porte (100) selon la revendication 4, **caractérisé en ce que** l'entraînement de porte (100) présente un profilé support (26) comme corps de base, dans lequel les éléments brides (17, 18) sont fixés au profilé support (26), de sorte que l'unité moteur (1) est agencée sur le profilé support (26) au moyen des éléments brides (17, 18).

6. Entraînement de porte (100) selon l'une quelconque des revendications précédentes, **caractérisé en ce qu'**une poulie (27) est agencée sur l'arbre de sortie (13), dans lequel la poulie (27) s'étend jusque devant la face frontale (14).

7. Entraînement de porte (100) selon la revendication 6, **caractérisé en ce que** la distance entre la poulie (27) et la face frontale (14) présente une valeur de 0,2 mm à 5 mm et/ou de 0,5 mm à 2,5 mm.

8. Entraînement de porte (100) selon la revendication 6 ou 7, **caractérisé en ce que** la poulie (27) présente une face d'enveloppe dentée (28), qui s'étend jusque devant la face frontale (14) et dans lequel la poulie (27) présente un anneau d'épaulement (29) sur l'extrémité libre opposée à la face frontale (14).

9. Entraînement de porte (100) selon l'une quelconque des revendications précédentes, **caractérisé en ce que** la face frontale (14) est formée exempte de moyens de fixation.

10. Entraînement de porte (100) selon l'une quelconque des revendications précédentes, **caractérisé en ce que** la zone au-dessus de la face frontale (14) est formée exempte d'élément bride.

11. Entraînement de porte (100) selon l'une quelconque des revendications 4 à 10, **caractérisé en ce qu'**une courroie (30) placée sur la poulie (27) s'étend jusqu'au-dessus de la commande (25), et/ou dans lequel l'alimentation électrique (24) est agencée sur l'unité moteur (1) sur un côté opposé à l'extension de la courroie (30).

12. Système de porte comportant un entraînement de porte (100) selon l'une quelconque des revendications précédentes, présentant au moins un élément de combinaison pour se combiner à un élément battant et/ou au moins un élément battant, avec lequel l'entraînement de porte (100) est en liaison fonctionnelle par entraînement.
